(19) Europäisches Patentamt
European Patent Office
Office européen des brevets

(11) **EP 2 459 966 B1**

(12) **FASCICULE DE BREVET EUROPEEN**

(45) Date de publication et mention
de la délivrance du brevet:
**16.10.2013 Bulletin 2013/42**

(21) Numéro de dépôt: **10737878.8**

(22) Date de dépôt: **26.07.2010**

(51) Int Cl.:
***G01C 21/16*** *(2006.01)*

(86) Numéro de dépôt international:
**PCT/EP2010/060802**

(87) Numéro de publication internationale:
**WO 2011/012576 (03.02.2011 Gazette 2011/05)**

(54) **PROCEDE D'ESTIMATION DE L'ORIENTATION D'UN SOLIDE EN MOUVEMENT**

**VERFAHREN ZUR SCHÄTZUNG DER RICHTUNG EINES BEWEGLICHEN FESTKÖRPERS**

**METHOD FOR ESTIMATING THE DIRECTION OF A MOVING SOLID**

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **31.07.2009 FR 0955435**

(43) Date de publication de la demande:
**06.06.2012 Bulletin 2012/23**

(73) Titulaires:
- **Movea
  38000 Grenoble (FR)**
- **Commissariat à l'Énergie Atomique
  et aux Énergies Alternatives
  75015 Paris (FR)**

(72) Inventeurs:
- **JALLON, Pierre
  F-38100 Grenoble (FR)**
- **BONNET, Stéphane
  F-69003 Lyon (FR)**

(74) Mandataire: **Nguyen Van Yen, Christian
Immeuble "Visium"
22 avenue Aristide Briand
94117 Arcueil Cedex (FR)**

(56) Documents cités:
EP-A1- 2 028 584    FR-A1- 2 838 185
US-A1- 2002 103 610

**Description**

La présente invention se rapporte au domaine général de l'estimation de l'orientation et du mouvement d'un solide.

Elle concerne un procédé d'estimation de l'orientation dans un repère inertiel d'un solide en mouvement. Elle porte également sur un procédé d'estimation de l'accélération propre dudit solide.

Dans un certain nombre de domaines, il peut être essentiel de déterminer l'orientation et le mouvement d'un solide en mouvement. C'est le cas, par exemple, dans la robotique, la téléopération, ou encore l'étalonnage de mécanisme, mais également dans les domaines du multimédia et des jeux vidéo, ainsi que dans les domaines de la biomécanique et du médical.

Ainsi, dans le domaine médical, la surveillance médicale d'une personne peut consister, par exemple, à repérer des états anormaux de celle- ci susceptibles de signifier un accident ou une crise, tel qu'un évanouissement ou une crise d'épilepsie.

Habituellement, le mouvement du corps mobile à étudier est déterminé par des détecteurs de mouvement comprenant un ou plusieurs capteurs tels que des accéléromètres, gyromètres et magnétomètres, présentant chacun un à trois axes de sensibilité.

Le brevet français FR 2 838 185 décrit un procédé de détermination de l'orientation d'un capteur pouvant être placé sur un solide. L'orientation du solide est estimée par des angles d'Euler dits de tangage, de roulis et de lacet, mesurés à partir d'un repère fixe inertiel. Il est naturel d'utiliser un repère fixe comportant un axe dirigé vers le Nord magnétique local, un axe dirigé vers l'Est magnétique local et un troisième axe dirigé vers le sol. Le capteur mesure, à chaque instant, un vecteur d'accélération et un vecteur de champ magnétique dans un repère mobile du capteur. Le vecteur d'accélération comporte une composante de champ gravitationnel et une composante d'accélération propre du solide. A partir de la connaissance de la composante de champ gravitationnel et du vecteur de champ magnétique à un instant donné, il est possible de déterminer l'orientation du solide à cet instant. En effet, l'orientation du solide peut être définie par la matrice de passage des vecteurs de champ gravitationnel et de champ magnétique du repère mobile du solide au repère fixe inertiel. Cette matrice de passage peut alors être décomposée, de manière connue, en trois rotations élémentaires desdits angles d'Euler, lesdits angles définissant de manière univoque l'orientation du solide dans le repère inertiel.

Cependant, il n'est généralement pas possible de distinguer, en conditions dynamiques, la contribution de la composante de champ gravitationnel de celle de l'accélération propre dans le vecteur d'accélération mesuré par l'accéléromètre.

Il est alors nécessaire d'associer à l'accéléromètre des capteurs supplémentaires, tels que des gyromètres. Cependant, le traitement du signal devient particulièrement complexe du fait de la combinaison nécessaire de signaux issus d'une pluralité de capteurs (accéléromètres, gyromètres, magnétomètres...), des incertitudes propres aux mesures de chaque capteur ainsi que de la dérive temporelle de certains d'entre eux (par exemple, les gyromètres).

Une autre solution consiste à estimer la composante de champ gravitationnel à l'instant considéré, dans le repère mobile du solide, par extrapolation des vecteurs d'accélération mesurés aux instants précédents. L'orientation du solide à l'instant considéré est alors déterminée à partir de la mesure du vecteur de champ magnétique à cet instant et de l'extrapolation du vecteur de champ gravitationnel au même instant. Cependant, l'incertitude sur le vecteur de champ gravitationnel extrapolé est d'autant plus importante qu'elle porte sur les trois composantes spatiales dudit vecteur. Les angles d'Euler déterminés par la suite présentent alors une imprécision importante.

Le brevet EP 2028584 décrit un dispositif de pointage utilisant un accéléromètre et un magnétomètre pour déterminer l'orientation d'un mobile en mouvement.

L'invention a principalement pour but de présenter un procédé d'estimation de l'orientation dans un repère inertiel d'un solide en mouvement équipé d'un accéléromètre et d'un magnétomètre montés sur ledit solide, remédiant au moins partiellement aux inconvénients mentionnés ci-dessus relatifs aux réalisations de l'art antérieur.

Pour ce faire, l'invention a pour objet un procédé d'estimation de l'orientation dans un repère inertiel d'un solide en mouvement équipé d'un accéléromètre et d'un magnétomètre montés sur ledit solide.

Selon l'invention, le procédé comprend les étapes consistant à :

- Mesurer, à un instant de référence $n_0$ pour lequel le solide est dépourvu d'accélération propre, des vecteurs de champ gravitationnel et de champ magnétique dans un repère du solide, lesdits vecteurs mesurés permettant de déterminer une orientation dudit solide dans le repère inertiel à l'instant de référence $n_0$ ;
- Mesurer, à différents instants successifs, des vecteurs d'accélération et des vecteurs de champ magnétique dans ledit repère du solide ;
- Estimer une matrice $U(n,n_0)$ permettant d'assurer la rotation de ladite orientation du solide précédemment déterminée à l'instant de référence $n_0$ à une orientation à un instant n ultérieur, ladite matrice $U(n,n_0)$ pouvant être exprimée sous forme de produit d'une première et d'une seconde matrices de rotation,

ladite première matrice étant définie par un premier angle de rotation du vecteur de champ magnétique m($n_0$) mesuré à l'instant de référence $n_0$ au vecteur de champ magnétique m(n) mesuré à l'instant n, autour d'un premier vecteur de rotation orienté suivant le produit vectoriel des vecteurs de champ magnétique mesurés aux instants n et $n_0$ ;

ladite seconde matrice étant définie par un second angle de rotation autour d'un second vecteur de rotation choisi parmi les vecteurs de champ magnétique mesuré à l'instant $n_0$ et n, ledit second angle étant estimé à partir du vecteur de champ gravitationnel $a_g(n_0)$ mesuré à l'instant de référence $n_0$ et d'un vecteur de champ gravitationnel extrapolé à l'instant n $\hat{a}_g(n)$ à partir d'une pluralité de vecteurs d'accélération mesurés à des instants antérieurs à l'instant n ;

- Estimer l'orientation du solide à l'instant n à partir de la matrice U(n,$n_0$) précédemment estimée et de ladite orientation à l'instant de référence $n_0$.

Il est à noter que le vecteur de champ gravitationnel extrapolé à l'instant n est déterminé dans le repère mobile du solide.

Avantageusement, l'orientation dudit solide dans le repère inertiel à un instant k quelconque est définie par la matrice de passage $R^{(k)}$ du repère du solide à l'instant k au repère inertiel, ladite orientation du solide à l'instant n étant obtenue par la relation $R^{(n)} = U(n, n_0) R^{(n_0)}$.

De préférence, ledit premier angle de rotation est estimé à partir de la projection dans une base orthonormale des vecteurs de champ magnétique mesurés aux instants no et n, ladite base étant définie par des premier et second vecteurs de base orientés, respectivement, suivant lesdits premier et second vecteurs de rotation et par un troisième vecteur de base orthogonal aux deux premiers.

Selon un mode de réalisation préféré de l'invention, ledit deuxième vecteur de base étant le vecteur de champ magnétique mesuré à l'instant n, ledit premier angle de rotation est estimé par la relation : $\alpha(n, n_0) = \arctan(m_z/m_y)$, où [0 $m_y$ $m_z$] sont les composantes de la projection dans ladite base du vecteur de champ magnétique mesuré à l'instant $n_0$.

Selon une variante, ledit deuxième vecteur de base étant le vecteur de champ magnétique mesuré à l'instant $n_0$, ledit premier angle de rotation est estimé par la relation : $\alpha(n, n_0) = \arctan(m_z/m_y)$, où [0 $m_y$ $m_z$] sont les composantes de la projection dans ladite base du vecteur de champ magnétique mesuré à l'instant n.

Alternativement, ledit premier angle de rotation peut être estimé par produit scalaire dudit vecteur de champ magnétique m($n_0$) mesuré à l'instant $n_0$ et du vecteur de champ magnétique m(n) à l'instant n, lesdits vecteurs étant préalablement normés.

Avantageusement, ledit premier angle de rotation étant préalablement estimé, le second angle de rotation est estimé par comparaison du produit de la matrice U(n, $n_0$) et du vecteur de champ gravitationnel mesuré à l'instant $n_0$ d'une part, avec ledit vecteur de champ gravitationnel extrapolé à l'instant n d'autre part.

Alternativement, le second angle de rotation peut être estimé par produit scalaire dudit vecteur de champ gravitationnel $a_g(n_0)$ de champ gravitationnel mesuré à l'instant $n_0$ et du vecteur de champ gravitationnel $\hat{a}_g(n_0)$ extrapolé à l'instant n, lesdits vecteurs étant préalablement normés et projetés dans le plan orthogonal audit deuxième vecteur de rotation.

L'instant de référence $n_0$ peut être déterminé à partir de mesures des vecteurs d'accélération.

Alternativement, l'instant de référence $n_0$ peut être déterminé préalablement à l'étape de mesure des vecteurs d'accélération.

L'invention concerne également un procédé d'estimation de l'accélération propre d'un solide en mouvement équipé d'un accéléromètre et d'un magnétomètre montés sur ledit solide, comprenant les étapes consistant à :

- Mettre en oeuvre un procédé d'estimation de l'orientation du solide selon l'une quelconque des caractéristiques précédentes, puis
- Calculer le vecteur de champ gravitationnel à l'instant n comme produit de la matrice U(n,$n_0$) précédemment estimée avec le vecteur de champ gravitationnel mesuré à l'instant de référence $n_0$ ;
- Déduire le vecteur d'accélération propre du solide à l'instant n à partir du vecteur d'accélération mesuré à l'instant n et du vecteur de champ gravitationnel à l'instant n précédemment calculé.

D'autres avantages et caractéristiques de l'invention apparaîtront dans la description détaillée non limitative ci-dessous.

On décrira à présent, à titre d'exemples non limitatifs, des modes de réalisation de l'invention, en se référant aux dessins annexés, dans lesquels :

La figure 1 est une vue schématique d'un solide en mouvement dans un repère inertiel ;

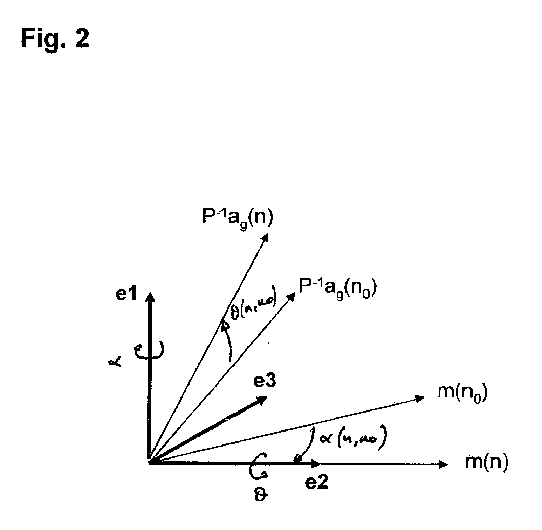

La figure 2 représente les vecteurs de champ gravitationnel et de champ magnétique dans la base orthonormale directe B ;

La figure 3 représente un organigramme de mise en oeuvre du procédé d'estimation de l'orientation du solide selon un mode de réalisation de l'invention ; et

La figure 4 représente un organigramme de mise en oeuvre du procédé d'estimation de l'accélération propre du solide selon un mode de réalisation de l'invention.

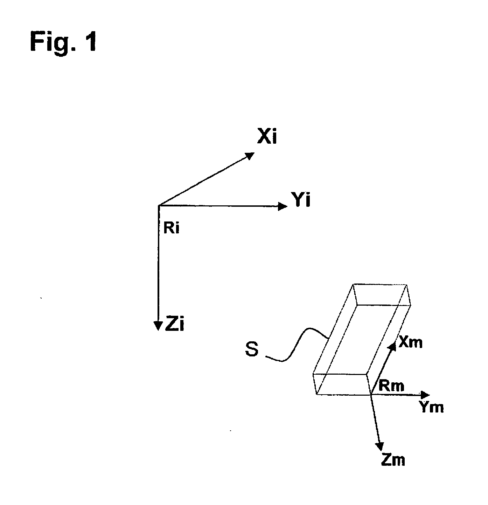

On considère un solide S en mouvement dans un repère fixe inertiel Ri représenté sur la figure 1. Le repère fixe inertiel Ri est défini par des axes Xi, Yi, Zi dirigés respectivement vers le Nord magnétique local, vers l'Est magnétique local et vers le sol. Dans ce repère, appelé également NED (acronyme pour *North- East- Down),* le champ gravitationnel terrestre et le champ magnétique terrestre s'écrivent :

$$g = \|g\| \begin{pmatrix} 0 \\ 0 \\ 1 \end{pmatrix}$$

et

$$m_T = \|m_T\| \begin{pmatrix} \cos \kappa \\ 0 \\ \sin \kappa \end{pmatrix}$$

où l'angle d'inclinaison $\kappa$ est de 60° environ en France.

Le solide est équipé d'un accéléromètre et d'un magnétomètre, tous deux montés solidaires sur ledit solide. Ledit accéléromètre et ledit magnétomètre comportent chacun trois axes de sensibilité, qui, de préférence, coïncident et forment un repère mobile Rm= (Xm, Ym, Zm) du solide.

Dans le cas où les axes de l'accéléromètre ne coïncident pas avec ceux du magnétomètre, on suppose que l'on effectue à chaque instant une opération de passage du repère de l'accéléromètre vers celui du magnétomètre, ou inversement. Le repère obtenu forme alors le repère du solide. Aussi, on peut considérer sans perte de généralité que le repère de l'accéléromètre et celui du magnétomètre coïncident l'un avec l'autre à chaque instant et forment le repère du solide.

L'accéléromètre fournit, à des instants k successifs, la mesure d'un vecteur d'accélération dans le repère mobile du solide. Le vecteur d'accélération a(k) comporte une composante d'accélération propre du solide $a_p$(k) et une composante de champ gravitationnel $a_g$(k).

Les vecteurs d'accélération mesurés par l'accéléromètre forment alors un ensemble d'échantillons à des instants k successifs noté {a(k)}. Chaque échantillon a(k) comprend donc trois composantes suivant les axes propres du repère mobile du solide.

Dans le cas particulier où le solide est en condition statique ou en mouvement rectiligne uniforme, la composante d'accélération propre du solide est nulle ou négligeable.

Le magnétomètre fournit, de préférence aux mêmes instants k que l'accéléromètre, la mesure d'un vecteur de champ magnétique dans le repère mobile du solide.

Les vecteurs de champ magnétique mesurés par le magnétomètre forment alors un ensemble {m(k)} d'échantillons à des instants k successifs. Chaque échantillon m(k) comprend donc trois composantes suivant les axes propres du repère mobile du solide.

Il est à noter que la mesure du magnétomètre est indépendante de l'accélération propre du solide.

Comme expliqué précédemment, la connaissance des vecteurs de champ magnétique m(n) et de champ gravitationnel $a_g$(n) à un instant quelconque n revient à déterminer l'orientation du solide dans le repère inertiel à l'instant considéré.

En effet, à un instant quelconque n, on peut écrire :

$$a_g(n) = R^{(n)} g \qquad\qquad (1)$$

$$m(n) = R^{(n)} m_T \qquad (2)$$

où $R^{(n)}$ est la matrice de passage du repère mobile du solide à l'instant n au repère fixe inertiel.

Cette matrice de passage $R^{(n)}$ du repère du solide à l'instant n au repère inertiel peut s'exprimer en une décomposition de trois rotations élémentaires d'angles d'Euler, tels que ceux de tangage, roulis, et lacet. Lesdits angles d'Euler déterminent de manière univoque l'orientation du solide dans le repère inertiel à l'instant considéré.

Il est à noter que la seule mesure du vecteur de champ magnétique m(n) ne suffit pas à déterminer la matrice de passage $R^{(n)}$. En effet, lorsque le vecteur de champ magnétique mesuré dans le repère du solide est colinéaire au même vecteur exprimé dans le repère inertiel, il forme un axe invariant autour duquel la rotation d'un angle quelconque n'est pas observable. Cette rotation laissant invariant le champ magnétique peut alors être déterminée par la mesure du champ gravitationnel.

Cependant, l'information de sortie de l'accéléromètre correspond à la mesure du vecteur d'accélération qui ne donne pas directement accès à la composante de champ gravitationnel et à la composante d'accélération propre :

$$a(k) = a_g(k) + a_p(k) = R^{(k)} g + a_p(k) \qquad (3)$$

Pour avoir accès au vecteur de champ gravitationnel à l'instant n, dans le repère du solide, il est possible de prédire sa valeur $\hat{a}_g(n)$ par extrapolation des vecteurs d'accélération $\{a(k)\}$, k≤n mesurés aux instants antérieurs ou égaux à l'instant n considéré. Cela repose sur l'hypothèse, vérifiée notamment lorsque le solide correspond à une personne en déplacement, que les mesures de champ gravitationnel et d'accélération propre forment, respectivement, un signal basse fréquence et un signal haute fréquence. L'opération d'extrapolation peut être effectuée par différentes techniques connues, par exemple une interpolation linéaire de type polynomiale ou non- linéaire. Des techniques du type filtre de Kalman peuvent également être utilisées.

Selon l'invention, et à la différence de l'exemple de l'art antérieur précédemment décrit, l'orientation du solide à un instant quelconque n n'est pas estimée directement à partir de la projection dans le repère inertiel des vecteurs de champ gravitationnel extrapolé $\hat{a}_g(n)$ et de champ magnétique mesuré m(n).

Une telle opération reviendrait en effet à déterminer la matrice $\hat{R}^{(n)}$ définie par :

$$\hat{a}_g(n) = \hat{R}^{(n)} g$$
$$m(n) = \hat{R}^{(n)} m_T \qquad (4)$$

où $\hat{R}^{(n)}$ comporterait toute l'incertitude du vecteur de champ gravitationnel extrapolé $\hat{a}_g(n)$. Il est en effet rappelé que l'incertitude sur le vecteur extrapolé $\hat{a}_g(n)$ est d'autant plus importante qu'elle comporte trois degrés de liberté, à savoir les trois composantes spatiales du vecteur $\hat{a}_g(n)$.

Au contraire, l'orientation du solide à un instant n est déterminée à partir d'une orientation connue du solide à un instant de référence $n_0$ antérieur et par une matrice de rotation $U(n, n_0)$ permettant de passer de l'orientation connue à l'instant de référence $n_0$ à la nouvelle orientation à l'instant n. On écrit ainsi :

$$R^{(n)} = U(n, n_0) R^{(n_0)} \qquad (5)$$

La connaissance de l'orientation du solide à l'instant de référence $n_0$ correspond à la détermination de la matrice de passage $R^{(n_0)}$ par les vecteurs de champ magnétique $m(n_0)$ et $a_g(n_0)$ mesurés à l'instant de référence $n_0$.

Du fait que l'orientation du solide à l'instant n (resp. $n_0$) est définie par les vecteurs de champ magnétique et de champ gravitationnel à l'instant n (resp. $n_0$), la relation (5) est équivalente à :

$$
\begin{aligned}
a_g(n) &= U(n, n_0) a_g(n_0) \\
m(n) &= U(n, n_0) m(n_0)
\end{aligned} \qquad (6)
$$

En effet, à partir de la relation (5), on obtient l'équation (6) portant sur le champ magnétique :

$$R^{(n)} = U\left(n, n_0\right) R^{(n_0)}$$
$$\Leftrightarrow R^{(n)} m_T = U\left(n, n_0\right) R^{(n_0)} m_T \qquad (7)$$
$$\Leftrightarrow m(n) = U\left(n, n_0\right) m(n_0)$$

Il est à noter que, de la même manière que pour la matrice de passage $R^{(n)}$, la seule connaissance des vecteurs de champ magnétique aux instants $n_0$ et n ne permet pas de déterminer la matrice $U(n,n_0)$. En effet, lorsque les vecteurs de champ magnétique aux instants $n_0$ et n sont colinéaires l'un à l'autre, ils forment un axe invariant autour duquel une rotation d'angle quelconque ne peut être observée. Cette incertitude peut être levée par une connaissance des vecteurs de champ gravitationnel aux instants $n_0$ et n.

La paramétrisation de la matrice $U(n,n_0)$ est maintenant décrite.

Il est rappelé que les mesures disponibles à l'instant n sont les vecteurs de champ gravitationnel $a_g(n_0)$ et de champ magnétique $m(n_0)$ mesurés à l'instant de référence $n_0$, les vecteurs d'accélération a (n) et de champ magnétique m (n) mesurés à l'instant n, ainsi qu'une pluralité de mesures à des instants successifs k précédents l'instant n de vecteurs d'accélération {a (k) }, k<n et de champ magnétique {m (k) }, k<n. Ces vecteurs sont mesurés dans le repère mobile du solide.

La paramétrisation de la matrice $U(n,n_0)$ consiste à décomposer le mouvement de rotation du solide en une première rotation élémentaire définie par le passage du vecteur de champ magnétique $m(n_0)$ mesuré à l'instant $n_0$ au vecteur m(n) mesuré à l'instant n, puis en une seconde rotation élémentaire autour du vecteur de champ magnétique m(n) mesuré à l'instant n. La matrice $U(n,n_0)$ peut donc être décomposée en une première et une seconde matrices de rotation décrivant, respectivement, ladite première et ladite seconde rotations élémentaires.

Une autre possibilité de décomposition matricielle, équivalente à la précédente, consiste à écrire une première matrice décrivant une première rotation élémentaire du solide autour du vecteur de champ magnétique à l'instant $n_0$, et une seconde matrice décrivant une seconde rotation élémentaire du solide décrite par le passage du vecteur de champ magnétique de l'instant $n_0$ au même vecteur à l'instant n. Cette variante est décrite en détail plus loin.

Selon la première possibilité de décomposition de la matrice U (n, $n_0$), la première matrice décrit la rotation du vecteur de champ magnétique m ($n_0$) à l'instant $n_0$ au vecteur m (n) à l'instant n. Cette première matrice est donc définie par un premier angle de rotation $\alpha$ (n, $n_0$) et par un premier vecteur de rotation orienté selon, ou colinéaire au produit vectoriel de ces deux vecteurs de champ magnétique m (n) xm ($n_0$) .

La seconde matrice décrit la rotation par un second angle de rotation $\theta(n,n_0)$ autour d'un second vecteur de rotation colinéaire au vecteur de champ magnétique m(n) à l'instant n.

Il est alors avantageux de paramétrer lesdites première et seconde matrices dans une base orthonormale directe construite à partir desdits premier et second vecteurs de rotation.

On note B= ($e_1$, $e_2$, $e_3$) ladite base orthonormale, où le premier vecteur de base est colinéaire audit premier vecteur de rotation m (n) xm ($n_0$), le second vecteur de base $e_2$ est colinéaire au second vecteur de rotation m (n) et le troisième vecteur de base est orthogonal aux deux premiers vecteurs de base $e_1$ et $e_2$.

La base orthonormale B peut être construite de différentes manières, par exemple à partir d'une méthode de Gram-Schimdt. Ainsi, si l'on note <x,y> le produit scalaire entre des vecteurs x et y, on construit :

- le second vecteur de base $e_2 = m(n) / \|m(n)\|$ ;
- le troisième vecteur de base $e_3 = \tilde{e}_3 / \|\tilde{e}_3\|$, avec $\tilde{e}_3 = m(n_0) - < m(n_0), e_2 > e_2$ ;
- le premier vecteur de base $e_1 = \tilde{e}_1 / \|\tilde{e}_1\|$, avec $\tilde{e}_1 = m(n) \wedge m(n_0) - < m(n) \wedge m(n_0), e_2 > e_2 - < m(n) \wedge m(n_0), e_3 > e_3$.

Ainsi, les vecteurs de base $e_2$ et $e_3$ engendrent un plan qui comprend les vecteurs de champ magnétique m (n), m ($n_0$) aux instants n et $n_0$, et le premier vecteur de base $e_1$ est orthogonal à ce plan.

La seule connaissance des vecteurs de champ magnétique aux instants n et $n_0$ suffit à construire la base orthonormale B.

La matrice $U(n,n_0)$ s'écrit donc :

$$U(n, n_0) = P(n, n_0).B_\theta(n, n_0).A_\alpha(n, n_0).P^{-1}(n, n_0) \qquad (8)$$

où $P(n,n_0)$ est la matrice de passage du repère du solide à la base orthonormale B.

Ladite première matrice $A_\alpha(n,n_0)$ s'écrit, dans cette base B :

$$A_\alpha(n,n_0) = \begin{bmatrix} 1 & 0 & 0 \\ 0 & \cos\alpha(n,n_0) & \sin\alpha(n,n_0) \\ 0 & -\sin\alpha(n,n_0) & \cos\alpha(n,n_0) \end{bmatrix} \tag{9}$$

Le premier angle de rotation $\alpha(n,n_0)$ peut être déterminé à partir des composantes des vecteurs de champ magnétiques $m(n)$, $m(n_0)$ aux instants n et $n_0$. Par définition de l'angle $\alpha(n,n_0)$, on peut écrire :

$$P^{-1}(n,n_0).m(n) = A_\alpha(n,n_0).P^{-1}(n,n_0).m(n_0) \tag{10}$$

Par ailleurs, les vecteurs de champ magnétique aux instants n et $n_0$ dans la base orthonormale B s'écrivent, respectivement :

$$P^{-1}(n,n_0).m(n) = \|m(n)\| \begin{pmatrix} 0 \\ 1 \\ 0 \end{pmatrix} \tag{11}$$

$$P^{-1}(n,n_0).m(n_0) = \|m(n_0)\| \begin{pmatrix} 0 \\ m_Y(n_0) \\ m_Z(n_0) \end{pmatrix} \tag{12}$$

En remarquant que la matrice $A_\alpha(n,n_0)$ est orthogonale et de déterminant 1, l'inverse de la matrice est la transposée de celle-ci. La relation (10) peut s'écrire :

$$P^{-1}(n,n_0).m(n_0) = {}^t A_\alpha(n,n_0).P^{-1}(n,n_0).m(n) \tag{13}$$

qui devient, avec les relations (11) et (12) :

$$\|m(n_0)\| \begin{pmatrix} 0 \\ m_Y(n_0) \\ m_Z(n_0) \end{pmatrix} = \begin{pmatrix} 0 \\ \cos\alpha(n,n_0) \\ \sin\alpha(n,n_0) \end{pmatrix} \tag{14}$$

Le premier angle de rotation est alors déterminé par la relation :

$$\alpha(n,n_0) = \arctan\left(m_Z(n_0)/m_Y(n_0)\right) \tag{15}$$

Alternativement, il est également possible de déterminer $\alpha(n, n_0)$ par produit scalaire desdits vecteurs de champ magnétiques aux instants n et $n_0$, préalablement normés.

La première matrice $A_\alpha(n,n_0)$ est donc totalement déterminée à partir des composantes des vecteurs de champ magnétique $m(n_0)$ et $m(n)$ mesurés aux instants $n_0$ et n.

La seconde matrice $B_\theta(n,n_0)$ s'écrit dans cette base B :

$$B_\theta(n,n_0) = \begin{bmatrix} \cos\theta(n,n_0) & 0 & \sin\theta(n,n_0) \\ 0 & 1 & 0 \\ -\sin\theta(n,n_0) & 0 & \cos\theta(n,n_0) \end{bmatrix} \qquad (16)$$

La rotation décrite par la seconde matrice $B_\theta(n,n_0)$ a lieu autour du second vecteur de base $e_2$, celui-ci étant colinéaire au vecteur de champ magnétique $m(n)$ mesuré à l'instant n. Il n'est donc pas accessible aux mesures des vecteurs de champ magnétique aux instants $n_0$ et n.

Le second angle de rotation $\theta(n, n_0)$ peut cependant être estimé à partir du vecteur de champ gravitationnel mesuré à l'instant $n_0$, et d'une extrapolation $\hat{a}_g(n)$ du vecteur de champ gravitationnel à l'instant n, dans le repère du solide, à partir des vecteurs d'accélération {a (k) }, k≤n. Cette extrapolation peut être effectuée par des techniques connues, telles que celles décrites précédemment.

La détermination du second angle de rotation $\theta(n,n_0)$ peut être effectuée par produit scalaire du vecteur de champ gravitationnel $a_g(n_0)$ mesuré à l'instant de référence $n_0$ et du vecteur de champ gravitationnel $\hat{a}_g(n)$ extrapolé à l'instant n, lesdits vecteurs étant préalablement normés et projetés sur le plan orthogonal audit second vecteur de rotation. Cette étape est alors indépendante de l'étape de détermination du premier angle de rotation $\alpha(n,n_0)$.

Une autre manière de déterminer le second angle de rotation $\theta(n,n_0)$ peut être par l'utilisation d'une méthode des moindres carrées, ou similaire, par exemple :

$$\theta(n,n_0) = \min_\theta \left\| U(n,n_0)a_g(n_0) - \hat{a}_g(n) \right\|^2 \qquad (17)$$

Il est à noter que cette étape de détermination de $\theta(n,n_0)$ par optimisation est avantageusement effectuée après la détermination du premier angle de rotation $\alpha(n,n_0)$. Ainsi, la méthode d'optimisation ne porte que sur une inconnue, l'angle $\theta(n,n_0)$, et non sur deux inconnues $\theta(n,n_0)$ et $\alpha(n,n_0)$.

Ainsi, la seconde matrice $B_\theta(n, n_0)$ est totalement déterminée à partir des composantes des vecteurs de champ magnétique $m(n_0)$ et $m(n)$ mesurés aux instants $n_0$ et n, ainsi que par les composantes du vecteur de champ gravitationnel mesuré à l'instant $n_0$ et par celles du même vecteur $\hat{a}_g(n)$ extrapolé à l'instant n.

De manière particulièrement avantageuse, l'incertitude à l'instant n ne présence plus trois degrés de liberté portant chacun sur les trois composantes spatiales du vecteur $\hat{a}_g(n)$, mais un seul degré de liberté portant sur le second angle de rotation $\theta(n,n_0)$.

La paramétrisation des première et seconde matrices de rotation permet alors d'estimer avec précision la matrice de rotation $U(n,n_0)$.

La détermination de l'orientation du solide à l'instant n, définie par la matrice de passage $R^{(n)}$, peut donc être obtenue par produit de la matrice de rotation $U(n,n_0)$ et de l'orientation du solide à l'instant de référence $n_0$ définie par $R^{(n_0)}$. La matrice de passage $R^{(n)}$ ainsi déterminée comporte une précision plus importante que la matrice de passage $\hat{R}^{(n)}$ précédemment mentionnée, dans la mesure où le nombre de degrés de liberté de l'incertitude a été réduit.

La variante de paramétrisation de la matrice de rotation $U(n,n_0)$ mentionnée précédemment est maintenant décrite.

Elle consiste à décomposer le mouvement de rotation du solide en une première rotation autour du vecteur de champ magnétique $m(n_0)$ à l'instant $n_0$, puis en une seconde rotation du vecteur de champ magnétique $m(n_0)$ à l'instant $n_0$ au même vecteur $m(n)$ à l'instant n.

La matrice $U(n,n_0)$ est alors similaire à celle décrite précédemment. Cependant, le second vecteur de rotation de la seconde matrice est colinéaire au vecteur de champ magnétique $m(n_0)$ à l'instant $n_0$. La base orthonormale est donc construite de la manière suivante :

- le second vecteur de base $e_2 = m(n_0) / \| m(n_0) \|$ ;
- le troisième vecteur de base $e_3 = \tilde{e}_3 / \|\tilde{e}_3\|$, avec $\tilde{e}_3 = m(n) - <m(n), e_2> e_2$ ;
- le premier vecteur de base $e_1 = \tilde{e}_1 / \|\tilde{e}_1\|$, avec $\tilde{e}_1 = m(n) \wedge m(n_0) - < m(n) \wedge m(n_0), e_2> e_2 - < m(n) \wedge m(n_0), e_3> e_3$.

La matrice $U(n,n_0)$ s'écrit donc :

$$U(n,n_0) = P(n,n_0).A_\alpha(n,n_0).B_\theta(n,n_0).P^{-1}(n,n_0) \qquad (18)$$

La détermination du premier angle de rotation $\alpha(n,n_0)$ peut être similaire à celle décrite précédemment, à la différence que l'on obtient la relation :

$$\alpha(n,n_0) = \arctan\left(m_Z(n)/m_Y(n)\right) \qquad (19)$$

où [0 $m_y$ $m_z$] sont les composantes de la projection dans ladite base du vecteur de champ magnétique m(n) mesuré à l'instant n.

La détermination du second angle de rotation $\theta(n,n_0)$ est identique ou similaire à celle décrite précédemment.

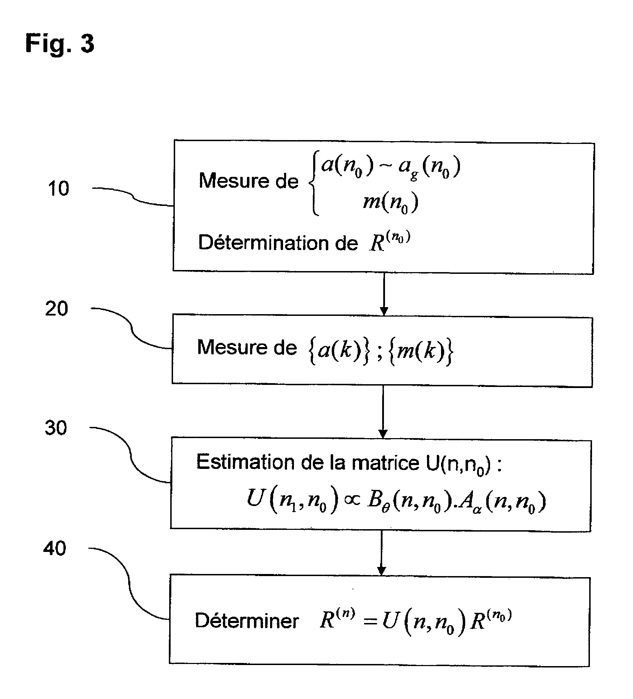

On décrit maintenant le procédé d'estimation de l'orientation du solide à un instant n dans le repère inertiel, en référence à la figure 3.

A l'étape 10, on mesure les vecteurs d'accélération et de champ magnétique à l'instant de référence $n_0$ pour lequel le solide est dépourvu d'accélération propre. Le vecteur d'accélération mesuré ne comprend alors que sa composante de champ gravitationnel. On en déduit l'orientation du solide à l'instant de référence $n_0$ par la matrice de passage $R^{(n0)}$ du repère du solide à l'instant de référence $n_0$ au repère inertiel.

A l'étape suivante 20, on mesure, à différents instants successifs, des vecteurs d'accélération {a(k)} et de champ magnétique {m(k)}.

A l'étape 30, on estime la matrice de rotation $U(n,n_0)$ de l'orientation du solide à l'instant de référence $n_0$ à l'orientation du solide à un instant n ultérieur.

On construit la base orthonormale B= ($e_1$, $e_2$, $e_3$) telle que définie précédemment.

On paramètre la première matrice de rotation à partir des vecteurs de champ magnétique mesurés aux instants $n_0$ et n.

On paramètre la seconde matrice de rotation à partir du vecteur de champ magnétique mesuré à l'instant $n_0$ et du même vecteur extrapolé à l'instant n.

On obtient ainsi l'estimation de la matrice de rotation $U(n,n_0)$.

A l'étape finale 40, on déduit l'orientation du solide à l'instant n par le produit de la matrice de rotation $U(n,n_0)$ et de la matrice de passage $R^{(n0)}$ à l'instant de référence $n_0$.

En variante de l'étape 10, et comme explicité précédemment, le vecteur de champ gravitationnel $a_g(n_0)$ à l'instant de référence $n_0$ peut être choisi à partir de mesures obtenues à l'étape 20, notamment par calcul de la variance des vecteurs d'accélération mesurés pendant une fenêtre temporelle définie.

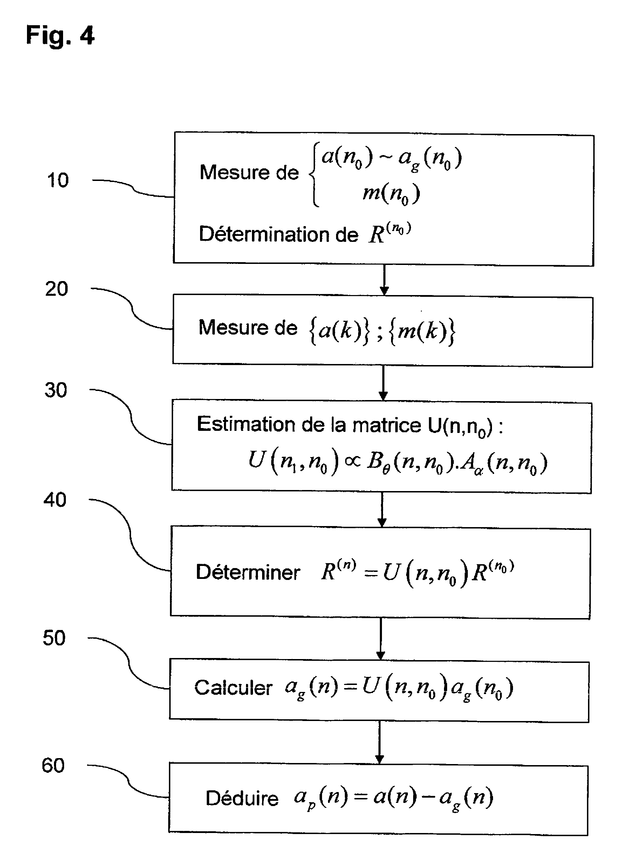

On décrit maintenant un procédé d'estimation de l'accélération propre du solide à un instant n dans le repère mobile du solide, en référence à la figure 4.

On met en oeuvre le procédé d'estimation de l'orientation du solide à l'instant n tel que décrit précédemment.

A l'étape 50, on calcule ensuite le vecteur de champ gravitationnel à l'instant n à partir du produit de la matrice $U(n,n_0)$ précédemment estimée avec le vecteur de champ gravitationnel mesuré à l'instant $n_0$ :

$$a_g(n) = U(n,n_0)a_g(n_0) \qquad (20)$$

Ce vecteur ainsi calculé présente une précision plus importante que celle du même vecteur extrapolé à l'instant n à partir des vecteurs d'accélération mesurés aux instants antérieurs, pour la même raison que précédemment, à savoir que le nombre de degrés de liberté de l'incertitude a été réduit de trois degrés à un seul degré lors de l'estimation de la matrice de rotation $U(n,n_0)$.

Enfin, à l'étape finale 60, on déduit le vecteur d'accélération propre du solide à l'instant n par différence du vecteur d'accélération mesuré à l'instant n et du vecteur de champ gravitationnel à l'instant n précédemment calculé :

$$a_p(n) = a(n) - a_g(n) \qquad (21)$$

Le vecteur d'accélération propre du solide est ainsi déterminé à l'instant n. L'orientation et le mouvement du solide sont ainsi connus avec précision.

**Revendications**

1. Procédé d'estimation de l'orientation dans un repère inertiel d'un solide en mouvement équipé d'un accéléromètre et d'un magnétomètre montés sur ledit solide, comprenant les étapes consistant à :

   - Mesurer (10), à un instant de référence $n_0$ pour lequel le solide est dépourvu d'accélération propre, des vecteurs de champ gravitationnel et de champ magnétique dans un repère du solide, lesdits vecteurs mesurés permettant de déterminer une orientation dudit solide dans le repère inertiel à l'instant de référence $n_0$ ; **caractérisé en ce qu'**il comprend en outre les étapes consistant à :
   - Mesurer (20), à différents instants successifs, des vecteurs d'accélération ($\{a(k)\}$) et des vecteurs de champ magnétique ($\{m(k)\}$) dans ledit repère du solide ;
   - Estimer (30) une matrice $U(n, n_0)$ permettant d'assurer la rotation de ladite orientation du solide précédemment déterminée à l'instant de référence $n_0$ à une orientation à un instant n ultérieur, ladite matrice $U(n, n_0)$ étant exprimée sous forme de produit d'une première et d'une seconde matrices de rotation, ladite première matrice étant définie par un premier angle de rotation ($\alpha(n, n_0)$) du vecteur de champ magnétique $m(n_0)$ mesuré à l'instant de référence $n_0$ au vecteur de champ magnétique $m(n)$ mesuré à l'instant n, autour d'un premier vecteur de rotation orienté suivant le produit vectoriel des vecteurs de champ magnétique mesurés aux instants n et $n_0$ ($m(n) \times m(no)$) ; ladite seconde matrice étant définie par un second angle de rotation ($\theta(n, n_0)$) autour d'un second vecteur de rotation choisi parmi les vecteurs de champ magnétique mesuré à l'instant $n_0$ et n, ledit second angle étant estimé à partir du vecteur de champ gravitationnel $a_g(n_0)$, mesuré à l'instant de référence no et d'un vecteur de champ gravitationnel extrapolé à l'instant n ($\hat{a}_g(n)$) à partir d'une pluralité de vecteurs d'accélération mesurés à des instants antérieurs à l'instant n ;
   - Estimer (40) l'orientation du solide à l'instant n à partir de la matrice $U(n,n_0)$ précédemment estimée et de ladite orientation à l'instant de référence $n_0$.

2. Procédé selon la revendication 1, **caractérisé en ce que** l'orientation dudit solide dans le repère inertiel à un instant k quelconque est définie par la matrice de passage $R^{(k)}$ du repère du solide à l'instant k au repère inertiel, ladite orientation du solide à l'instant n étant obtenue par la relation $R^{(n)} = U(n, n_0) R^{(n_0)}$.

3. Procédé selon la revendication 1 ou 2, **caractérisé en ce que** ledit premier angle de rotation ($\alpha(n,n_0)$) est estimé à partir de la projection dans une base orthonormale des vecteurs de champ magnétique mesurés aux instants $n_0$ et n, ladite base étant définie par des premier et second vecteurs de base orientés, respectivement, suivant lesdits premier et second vecteurs de rotation et par un troisième vecteur de base orthogonal aux deux premiers.

4. Procédé selon la revendication 3, **caractérisé en ce que**, ledit deuxième vecteur de base étant le vecteur de champ magnétique mesuré à l'instant n, ledit premier angle de rotation est estimé par la relation : $\alpha(n, n_0) = \arctan(m_z/m_y)$, où [$0$ $m_y$ $m_z$] sont les composantes de la projection dans ladite base du vecteur de champ magnétique mesuré à l'instant $n_0$.

5. Procédé selon la revendication 3, **caractérisé en ce que**, ledit deuxième vecteur de base étant le vecteur de champ magnétique mesuré à l'instant $n_0$, ledit premier angle de rotation est estimé par la relation : $\alpha(n, n_0) = \arctan(m_z/m_y)$, où [$0$ $m_y$ $m_z$] sont les composantes de la projection dans ladite base du vecteur de champ magnétique mesuré à l'instant n.

6. Procédé selon la revendication 1 ou 2, **caractérisé en ce que** ledit premier angle de rotation ($\alpha(n,n_0)$) est estimé par produit scalaire dudit vecteur de champ magnétique $m(n_0)$ mesuré à l'instant $n_0$ et vecteur de champ magnétique $m(n)$ mesuré à l'instant n, lesdits vecteurs étant préalablement normés.

7. Procédé selon l'une quelconque des revendications 1 à 6, **caractérisé en ce que**, ledit premier angle de rotation ($\alpha(n,n_0)$) étant préalablement estimé, le second angle de rotation ($\theta(n,n_0)$) est estimé par comparaison du produit de la matrice $U(n,n_0)$ et du vecteur de champ gravitationnel mesuré à l'instant $n_0$ d'une part, avec ledit vecteur de champ gravitationnel extrapolé à l'instant n d'autre part.

8. Procédé selon l'une quelconque des revendications 1 à 6, **caractérisé en ce que** le second angle de rotation ($\theta(n, n_0)$) est estimé par produit scalaire dudit vecteur de champ gravitationnel $a_g(n_0)$ mesuré à l'instant $n_0$ et du vecteur de champ gravitationnel $\hat{a}_g(n)$ extrapolé à l'instant n, lesdits vecteurs étant préalablement normés et projetés dans le plan orthogonal audit deuxième vecteur de rotation.

9. Procédé selon l'une quelconque des revendications 1 à 8, **caractérisé en ce que** l'instant de référence $n_0$ est déterminé à partir de mesures des vecteurs d'accélération.

10. Procédé selon l'une quelconque des revendications 1 à 8, **caractérisé en ce que** l'instant de référence $n_0$ est déterminé préalablement à l'étape de mesure des vecteurs d'accélération.

11. Procédé d'estimation de l'accélération propre d'un solide en mouvement équipé d'un accéléromètre et d'un magnétomètre montés sur ledit solide, **caractérisé en ce qu'**il comprend les étapes consistant à :

   - Mettre en oeuvre un procédé d'estimation de l'orientation du solide selon l'une quelconque des revendications 1 à 9, puis
   - Calculer (50) le vecteur de champ gravitationnel à l'instant n ($a_g$ (n) ) comme produit de la matrice U (n, $n_0$) précédemment estimée avec le vecteur de champ gravitationnel mesuré à l'instant de référence $n_0$ ($a_g$ ($n_0$) ) ;
   - Déduire (60) le vecteur d'accélération propre du solide à l'instant n ($a_p$(n)) à partir du vecteur d'accélération mesuré à l'instant n (a(n)) et du vecteur de champ gravitationnel à l'instant n ($a_g$(n)) précédemment calculé.

**Patentansprüche**

1. Verfahren zur Schätzung der Richtung eines beweglichen Festkörpers in einem Trägheitsbezugsrahmen, der mit einem Beschleunigungsmesser und einem Magnetometer ausgestattet ist, die auf dem Festkörper montiert sind, das die Schritte umfasst:

   - Messen (10), zu einem Referenzzeitpunkt $n_0$, zu dem der Festkörper keine eigene Beschleunigung hat, der Gravitationsfeld- und Magnetfeldvektoren in einem Bezugsrahmen des Festkörpers, wobei die gemessenen Vektoren erlauben, eine Richtung des Festkörpers in dem Trägheitsbezugsrahmen zum Referenzzeitpunkt $n_0$ zu bestimmen, **dadurch gekennzeichnet, dass** es ferner die Schritte umfasst:
   - Messen (20), zu verschiedenen aufeinanderfolgenden Zeitpunkten, der Beschleunigungsvektoren ({a(k)}) und der Magnetfeldvektoren ({m(k)}) in dem Bezugsrahmen des Festkörpers,
   - Schätzen (30) einer Matrix U (n, $n_0$), die es erlaubt, die Rotation der Richtung des Festkörpers sicherzustellen, die zuvor zum Referenzzeitpunkt $n_0$ in einer Richtung zu einem späteren Zeitpunkt n bestimmt wird,
   wobei die Matrix U (n, $n_0$) in Form des Produkts einer ersten und einer zweiten Rotationsmatrix ausgedrückt ist, wobei die erste Matrix durch einen ersten Rotationswinkel ($\alpha$ (n, $n_0$) ) des Magnetfeldvektors m ($n_0$) festgelegt ist, der zum Referenzzeitpunkt $n_0$ am Magnetfeldvektor m (n) gemessen wird, der zum Zeitpunkt n gemessen wird, um einen ersten Rotationsvektor, der gemäß dem Vektorprodukt der Magnetfeldvektoren ausgerichtet ist, die zu den Zeitpunkten n und $n_0$ (m (n) xm ($n_0$) ) gemessen werden,
   wobei die zweite Matrix durch einen zweiten Rotationswinkel ($\theta$ (n, $n_0$) ) um einen zweiten Rotationsvektor festgelegt ist, der aus den Magnetfeldvektoren ausgewählt ist, die zum Zeitpunkt $n_0$ und n gemessen werden, wobei der zweite Winkel aus dem Vektor des Gravitationsfeldvektor $a_g$ ($n_0$) abgeleitet wird, der zum Referenzzeitpunkt $n_0$ gemessen wird und aus einem Gravitationsfeldvektor, der zum Zeitpunkt n ($\hat{a}_g$ (n) ) aus einer Vielzahl von Beschleunigungsvektoren extrapoliert wird, die zu früheren Zeitpunkten als dem Zeitpunkt n gemessen werden,
   - Schätzung (40) der Richtung des Festkörpers zum Zeitpunkt n auf der Basis der zuvor geschätzten Matrix U (n, $n_0$) und der Richtung zum Referenzzeitpunkt $n_0$.

2. Verfahren nach Anspruch 1, **dadurch gekennzeichnet, dass** die Richtung des Festkörpers im Trägheitsbezugsrahmen zu einem beliebigen Zeitpunkt k von der Durchgangsmatrix $R^{(k)}$ des Bezugsrahmens des Festkörpers zum Zeitpunkt k im Trägheitsbezugsrahmen festgelegt ist, wobei die Richtung des Festkörpers zum Zeitpunkt n durch die Relation $R^{(n)} = U$ (n, $n_0$)$R^{(n0)}$ ermittelt wird.

3. Verfahren nach Anspruch 1 oder 2, **dadurch gekennzeichnet, dass** der erste Rotationswinkel ($\alpha$(n, $n_0$)) aus der Projektion in einer orthonormalen Basis der Magnetfeldvektoren geschätzt wird, die zu den Zeitpunkten $n_0$ und n gemessen werden, wobei die Basis vom ersten und zweiten Basisvektor festgelegt ist, die jeweils gemäß den dem ersten und zweiten Rotationsvektor ausgerichtet sind, und von einem dritten, zu den zwei ersten orthogonalen Basisvektor.

4. Verfahren nach Anspruch 3, **dadurch gekennzeichnet, dass**, wobei der zweite Basisvektor der Magnetfeldvektor ist, der zum Zeitpunkt n gemessen wird, der erste Rotationswinkel durch die Relation $\alpha$ (n, $n_0$) = arctan ($m_z/m_y$) geschätzt wird, wobei [0 $m_y$ $m_z$] Komponenten der Projektion des Magnetfeldvektors, der zum Zeitpunkt $n_0$ gemessen wird, in der Basis sind.

5. Verfahren nach Anspruch 3, **dadurch gekennzeichnet, dass**, wobei der zweite Basisvektor der Magnetfeldvektor ist, der zum Zeitpunkt $n_0$ gemessen wird, der erste Rotationswinkel durch die Relation $\alpha$ (n, $n_0$) = arctan ($m_z/m_y$) geschätzt wird, wobei [0 $m_y$ $m_z$] Komponenten der Projektion des Magnetfeldvektors, der zum Zeitpunkt n gemessen wird, in der Basis sind.

6. Verfahren nach Anspruch 1 oder 2, **dadurch gekennzeichnet, dass** der erste Rotationswinkel ($\alpha(n, n_0)$) durch das skalare Produkt des Magnetfeldvektors $m(n_0)$, der zum Zeitpunkt $n_0$ gemessen wird, geschätzt wird und des Magnetfeldvektors m(n), der zum Zeitpunkt n gemessen wird, wobei die Vektoren zuvor genormt werden.

7. Verfahren nach einem der Ansprüche 1 bis 6, **dadurch gekennzeichnet, dass**, wobei der erste Rotationswinkel ($\alpha(n, n_0)$) zuerst geschätzt wird, der zweite Rotationswinkel ($\theta(n, n_0)$) durch Vergleich des Produkts der Matrix U(n, $n_0$) und des Gravitationsfeldvektors, der zum Zeitpunkt $n_0$ gemessen wird, einerseits, mit dem zum Zeitpunkt n extrapolierten Gravitationsfeldvektor andererseits geschätzt wird.

8. Verfahren nach einem der Ansprüche 1 bis 6, **dadurch gekennzeichnet, dass** der zweite Rotationswinkel ($\theta(n, n_0)$) durch das skalare Produkt des Gravitationsfeldvektors $a_g(n_0)$, der zum Zeitpunkt $n_0$ gemessen wird, und des Gravitationsfeldvektors äg(n), der zum Zeitpunkt n extrapoliert wird, geschätzt wird, wobei die Vektoren zuvor normiert und auf die zum zweiten Rotationsvektor orthogonale Ebene projiziert werden.

9. Verfahren nach einem der Ansprüche 1 bis 8, **dadurch gekennzeichnet, dass** der Referenzzeitpunkt $n_0$ auf der Basis von Messungen der Beschleunigungsvektoren bestimmt wird.

10. Verfahren nach einem der Ansprüche 1 bis 8, **dadurch gekennzeichnet, dass** der Referenzzeitpunkt $n_0$ vor dem Schritt des Messens der Beschleunigungsvektoren bestimmt wird.

11. Verfahren zur Schätzung der eigenen Beschleunigung eines beweglichen Festkörpers, der mit einem Beschleunigungsmesser und einem Magnetometer ausgestattet ist, die auf dem Festkörper montiert sind, **dadurch gekennzeichnet, dass** es die Schritte umfasst:

   - Umsetzung eines Verfahrens zur Schätzung der Richtung des Festkörpers nach einem der Ansprüche 1 bis 9, danach
   - Berechnung (50) des Gravitationsfeldvektors zum Zeitpunkt n ($a_g$(n)) als Produkt der zuvor geschätzten Matrix U(n, $n_0$) durch den Gravitationsfeldvektor, der zum Referenzzeitpunkt $n_0$ ($a_g(n_0)$) gemessen wird,
   - Ableitung (60) des eigenen Beschleunigungsvektors des Festkörpers zum Zeitpunkt n ($a_p$(n)) aus dem Beschleunigungsvektor, der zum Zeitpunkt n (a(n)) gemessen wird, und dem Gravitationsfeldvektor zum zuvor berechneten Zeitpunkt n ($a_g$(n)).

**Claims**

1. A method for estimating orientation in an inertial frame of reference of a moving solid equipped with an accelerometer and a magnetometer mounted on said solid, comprising the steps of:

   - measuring (10), at a reference instant $n_0$ at which the solid is devoid of proper acceleration, gravitational field and magnetic field vectors in a frame of reference of the solid, said measured vectors allowing an orientation of said solid to be determined in the inertial frame of reference at said reference instant no;

   **characterised in that** it further comprises the steps of:

   - measuring (20), at various successive instants, acceleration vectors ({a(k)}) and magnetic field vectors ({m (k)}) in said frame of reference of the solid;
   - estimating (30) a matrix U (n, $n_0$) for ensuring the rotation of said orientation of the solid previously determined at said reference instant $n_0$ to an orientation at a subsequent instant n;

said matrix U (n, n0) being expressed in the form of the product of a first and a second rotation matrix;
said first matrix being defined by a first angle of rotation ($\alpha$ (n, $n_0$) ) of the magnetic field vector m ($n_0$) measured at said reference instant $n_0$ to the magnetic field vector m (n) measured at the instant n, around a first rotation vector oriented according to the vectorial product of the magnetic field vectors measured at instants n and $n_0$ (m (n) xm ($n_0$) ) ;
said second matrix being defined by a second angle of rotation ($\theta$ (n, no) ) around a second rotation vector selected from among the magnetic field vectors measured at the instant $n_0$ and n, said second angle being estimated on the basis of the gravitational field vector $a_g$ ($n_0$), measured at the reference instant $n_0$, and a gravitational field vector extrapolated at the instant n ($\hat{a}_g$ (n) ) on the basis of a plurality of acceleration vectors measured at instants prior to the instant n;
- estimating (40) the orientation of the solid at the instant n on the basis of the previously estimated matrix U(n, $n_0$) and of said orientation at the reference instant $n_0$.

2. The method according to claim 1, **characterised in that** the orientation of said solid in the inertial frame of reference at any instant k is defined by the transfer matrix $R^{(k)}$ of the frame of reference of the solid at the instant k at the inertial frame of reference, said orientation of the solid at the instant n being obtained by the relation $R^{(n)} = U(n, n_0)R^{(n0)}$.

3. The method according to claim 1 or 2, **characterised in that** said first angle of rotation ($\alpha$(n, no)) is estimated on the basis of the projection into an orthonormal base of the magnetic field vectors measured at the instants $n_0$ and n, said base being defined by first and second base vectors respectively oriented along said first and second rotation vectors and by a third base vector orthogonal to the first two vectors.

4. The method according to claim 3, **characterised in that**, with said second base vector being the magnetic field vector measured at the instant n, said first angle of rotation is estimated by the relation: ($\alpha$(n, no)) = arctan ($m_z/m_y$), where [0 $m_y$ $m_z$] are the components of the projection into said base of the magnetic field vector measured at the instant no.

5. The method according to claim 3, **characterised in that**, with said second base vector being the magnetic field vector measured at the instant $n_0$, said first angle of rotation is estimated by the relation: ($\alpha$(n, no)) = arctan ($m_z/m_y$), where [0 $m_y$ $m_z$] are the components of the projection into said base of the magnetic field vector measured at the instant n.

6. The method according to claim 1 or 2, **characterised in that** said first angle of rotation ($\alpha$(n, no)) is estimated by the scalar product of said magnetic field vector m($n_0$) measured at the instant $n_0$ and the magnetic field vector m (n) measured at the instant n, said vectors being previously normalised.

7. The method according to any one of claims 1 to 6, **characterised in that**, with said first angle of rotation ($\alpha$(n, no)) being first estimated, the second angle of rotation ($\theta$(n, no)) is estimated by comparing the product of the matrix U (n, $n_0$) and of the gravitational field vector measured at the instant $n_0$, on the one hand, with said gravitational field vector extrapolated at the instant n, on the other hand.

8. The method according to any one of claims 1 to 6, **characterised in that** the second angle of rotation ($\theta$(n, no)) is estimated by the scalar product of said gravitational field vector $a_g$($n_0$) measured at the instant $n_0$ and of the gravitational field vector $\hat{a}_g$(n) extrapolated at the instant n, said vectors being previously normalised and projected on to the plane orthogonal to said second rotation vector.

9. The method according to any one of claims 1 to 8, **characterised in that** the reference instant $n_0$ is determined based on the measurements of the acceleration vectors.

10. The method according to any one of claims 1 to 8, **characterised in that** the reference instant $n_0$ is determined prior to the step of measuring the acceleration vectors.

11. A method for estimating the proper acceleration of a moving solid equipped with an accelerometer and a magnetometer mounted on said solid, **characterised in that** it comprises the steps of:

- implementing a method for estimating the orientation of the solid according to any one of claims 1 to 9; then
- calculating (50) the gravitational field vector at the instant n($a_g$(n)) as a product of the matrix U(n, $n_0$) previously estimated by the gravitational field vector measured at the reference instant $n_0$ ($a_g$($n_0$));

- deducing (60) the proper acceleration vector of the solid at the instant n ($a_p(n)$) based on the acceleration vector measured at the instant $n(a(n))$ and on the gravitational field vector at the instant $n(a_g(n))$ calculated previously.

# Fig. 1

# Fig. 2

# Fig. 3

10 — Mesure de $\left\{\begin{array}{c} a(n_0) \sim a_g(n_0) \\ m(n_0) \end{array}\right.$

Détermination de $R^{(n_0)}$

20 — Mesure de $\{a(k)\}$ ; $\{m(k)\}$

30 — Estimation de la matrice $U(n,n_0)$ :

$$U(n_1,n_0) \propto B_\theta(n,n_0).A_\alpha(n,n_0)$$

40 — Déterminer $R^{(n)} = U(n,n_0)R^{(n_0)}$

# Fig. 4

**10** — Mesure de $\begin{cases} a(n_0) \sim a_g(n_0) \\ m(n_0) \end{cases}$

Détermination de $R^{(n_0)}$

**20** — Mesure de $\{a(k)\} ; \{m(k)\}$

**30** — Estimation de la matrice $U(n,n_0)$ :

$$U(n_1,n_0) \propto B_\theta(n,n_0).A_\alpha(n,n_0)$$

**40** — Déterminer $R^{(n)} = U(n,n_0)R^{(n_0)}$

**50** — Calculer $a_g(n) = U(n,n_0)a_g(n_0)$

**60** — Déduire $a_p(n) = a(n) - a_g(n)$

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2838185

- EP 2028584 A